# EUROPEAN PATENT APPLICATION

(11) **EP 3 054 569 A1**
(43) Date of publication of application: **10.08.2016**
(21) Application number: 15153989.7
(22) Date of filing: 05.02.2015
(51) Int. Cl.: H02K 9/08, H02K 7/18

(54) **Cooling arrangement**

(71) Applicant: Siemens Aktiengesellschaft, 80333 München (DE)
(72) Inventor: Airoldi, Giovanni, 7330 Brande (DK); Soerensen, Peter Hessellund, 8740 Brædstrup (DK)

(57) **Abstract**

The invention describes a cooling arrangement (1) realised to cool stator windings (30) of a stator (3) enclosed in a generator housing (40), which cooling arrangement (1) comprises a fan arrangement (14) realized to direct a gaseous cooling medium (AF) into a cavity (200R, 200F), which cavity (200R, 200F) is defined by a stator end face (32R, 32F) and the generator housing (40); an arrangement of bypass openings (10) in a stator end face (32F, 32R), wherein a bypass opening (10) provides a path into an interior (31) of the stator (3); and a manifold (11) arranged to extend over the bypass openings (10) and at least partially over a winding overhang (300, 300H) of the stator windings (30) and realized to guide a cooling flow (AFy) through the winding overhang (300, 300H) into the stator interior (31). The invention further describes a direct-drive wind turbine (2); a method of cooling stator windings (30) of a stator (3); and a method of retrofitting a wind turbine (5).

## Description

The invention describes a cooling arrangement for cooling the stator windings of a stator, a direct-drive wind turbine comprising such a cooling arrangement, and a method of cooling stator windings.

In a wind turbine generator, some way of cooling the hot coils or windings of the armature (usually the stator) is necessary, since the electrical resistance of the windings is proportional to their temperature, and the power output of the generator decreases as the resistance increases. Furthermore, an air-gap between stator and rotor is generally very small, so that heat from the windings may also be transferred to the magnets. Excessively high temperatures in the magnets can cause these to deteriorate over time. Therefore, it is necessary to ensure that the winding temperature is kept at an acceptably low level.

A winding or coil generally comprises a "loop" of a low-resistivity metal, with two halves extending along the length of the stator, and with each winding half arranged between parallel stator teeth. At either end of the stator, a winding undergoes a 180° turn. A wind turbine generator is generally realised as a three-phase machine, i.e. the windings are arranged in interleaved groups of three. Since each winding must undergo the 180° turn at each end of the stator, the ends of the windings for three phases must be interleaved, and the interleaved winding ends extend beyond the outer ends of the stator in a "winding overhang". To ensure minimum losses and balanced phases, the winding overhang is generally realised in as compact a manner as possible.

In one approach to cooling such a generator, a gaseous coolant such as air can be blown into the air-gap, where it absorbs heat from the windings. The warmed air can then be expelled from the generator. Alternatively, the air can pass from the air-gap through channels in the stator body and into the stator interior. The warmed air can be cooled using heat exchangers arranged in the stator interior cavity, or by means of any other appropriate cooling technique, and the cooled air can once again be blown into the air-gap.

A problem with the known cooling arrangements is that the winding overhang is difficult to cool, since any cooling gas being blown or sucked into the air-gap will effectively bypass this region. The interleaved winding ends of the overhang extend to some distance beyond each end of the stator, and the 180° turns in the winding overhang effectively present a barrier or deterrent to any gaseous cooling medium. The gaseous coolant will always follow the easiest path on its way into the air-gap, and will therefore simply flow around the winding overhang. This leads to an insufficient cooling of the winding end regions. As a result, the temperature in one or more regions of the winding overhang can be significantly hotter than the temperature of the straight winding sections between the stator teeth. Since the conductivity of the winding ends decreases as their temperature increases, the heat-related losses of the generator increase as a result. Therefore, the power output of the generator is effectively limited by the hottest temperature in the winding overhang.

It is therefore an object of the invention to provide an improved way of cooling the winding overhang region.

This object is achieved by the cooling arrangement of claim 1; by the direct-drive wind turbine of claim 11; by the method of claim 12 of cooling stator windings; and by the method of claim 15 of retrofitting a wind turbine.

According to the invention, the cooling arrangement is realized to cool stator windings of a stator enclosed in a generator housing, and comprises a fan arrangement for directing a gaseous cooling medium into a cavity, which cavity is defined by a stator end face and the generator housing; an arrangement of bypass openings in a stator end face, wherein a bypass opening provides a path for an airflow into an interior of the stator; and a manifold arranged to extend over the bypass openings and at least partially over a winding overhang of the stator windings, wherein the manifold is realized to deflect a portion of the cooling airflow from the cavity into the stator interior.

In the context of the invention, the manifold may be understood to be a cover or shield that serves to encourage or compel an airflow to pass through the winding overhang and into the bypass opening(s). The manifold can be made of any suitable material, for example fibreglass or plastic, since these are light and can be formed with relatively little effort to give any desired shape. To act as a guide for the cooling airflow, the manifold is arranged as a "divider" or screen between a part of the cavity about the winding overhang region and the remainder of the cavity. The manifold can be secured to the stator end face in order to define a region or space that includes the bypass openings and the winding overhang region. This region or space is essentially closed off except for a gap or entrance close to the winding overhang to allow the cooling airflow to enter this space. An advantage of the cooling arrangement according to the invention is that the combination of manifold and bypass openings acts to encourage or compel a portion of the cooling airflow through the problematic winding overhang region. Therefore, a cooling airflow can deliberately be guided through a winding overhang region. In this way, it is possible to maintain a favourably low temperature in the winding overhang, minimizing heat-related losses, so that the power output of the generator can be increased accordingly.

According to the invention, the direct-drive wind turbine comprises an outer rotor and an inner stator, wherein the outer rotor is arranged on a rotatable generator housing; and a cooling arrangement according to the invention, realised to cool stator windings of the stator.

An advantage of the direct-drive wind turbine according to the invention is that it can deliver a higher power output than a comparable wind turbine with a conventional cooling arrangement. Furthermore, this improvement in power output can be achieved with relatively low cost and effort.

According to the invention, the method of cooling stator windings of a stator enclosed in a generator housing comprises the steps of providing a number of bypass openings in a stator end face, wherein a bypass opening provides a path for an airflow into the stator interior; arranging a manifold to extend over the bypass openings and at least partially over a winding overhang of the stator windings; and directing a gaseous cooling medium into a cavity defined by a stator end face and the generator housing.

An advantage of the method according to the invention of cooling stator windings is that a portion of the cooling airflow can deliberately be compelled to pass through the relatively hot winding overhang, so that this hot region can be cooled in an effective manner. Furthermore, this improvement in the efficiency of the cooling arrangement can be achieved in a straightforward manner.

According to the invention, the method of retrofitting a wind turbine - comprising a stator enclosed in a generator housing and a gaseous cooling arrangement for cooling stator windings of the stator - comprises the steps of forming at least one bypass opening in a region of the stator end face corresponding to a hottest winding overhang region; and arranging a manifold to extend over the bypass openings and at least partially over a winding overhang of the stator windings such that a cooling airflow is directed from the cavity into the stator interior.

An advantage of the method according to the invention of retrofitting a wind turbine is that a significant improvement in the cooling efficiency can be achieved with relatively little effort and at a low cost. Any wind turbine that is already equipped with a suitable gaseous cooling arrangement can be adapted by forming the bypass openings in one or both stator end plates and by arranging a manifold over these. When the gaseous cooling arrangement is activated during operation of the generator, the increased cooling effect in a winding overhang region underneath a manifold results in an increase in efficiency of the generator. Such a wind turbine can therefore deliver an increased power output compared to a comparable wind turbine using a conventional cooling arrangement.

Particularly advantageous embodiments and features of the invention are given by the dependent claims, as revealed in the following description. Features of different claim categories may be combined as appropriate to give further embodiments not described herein.

In the following, it may be assumed that the generator is a wind turbine generator, particularly a direct-drive generator with an outer rotor that is directly caused to rotate by the action of the rotor blades. Furthermore, it may be assumed that the gas used by the cooling arrangement is air, although it shall be understood that any suitable gas could be used. The term "cooling airflow" as used in the following may therefore be understood as a cooling flow of air. The cooling airflow can absorb heat from a heat source and the warmed air can subsequently be expelled from the wind turbine. Equally, the warmed air can be "recycled", i.e. it can be cooled and then re-used as a cooling airflow.

In a direct-drive wind turbine, the stator windings are arranged on a cylindrical stator body, which can have a diameter of several metres. The interior of the stator is essentially hollow, and affords room for various components, particularly components of the cooling arrangement. The stator cavity can be closed off from the outside by an end plate at the drive end of the generator and an end plate at the non-drive end.

Magnets, usually permanent magnets, are mounted on the interior surface of the outer rotor, and are separated from the stator windings by a narrow air-gap. As mentioned above, the generator construction makes it difficult to bring a cooling medium close to the heat source, i.e. the windings. In a preferred embodiment of the invention, the cooling arrangement comprises a plurality of axial cooling channels, wherein an axial cooling channel extends between adjacent windings arranged on the stator. The cooling airflow can be directed along these axial cooling channels, so that heat can be absorbed close to is source.

In one embodiment, the cooling airflow can enter the airgap at one end of the stator, and warmed air can exit the airgap at the other end of the stator. However, such a realization might result in an uneven cooling of the windings. Therefore, in a further preferred embodiment of the invention, the cooling arrangement comprises a plurality of radial channels, wherein a radial channel extends from an axial cooling channel into the stator interior. In this realization, a cooling airflow can enter the axial cooling channels at both ends of the stator, and the warmed air can pass from the axial channels into the stator interior, where it can be collected and treated in a suitable manner. This embodiment ensures a more even cooling of the straight winding sections.

The efficiency of the cooling arrangement will depend to some extent on the rate at which the cooling airflow passes over the hot windings. Therefore, in a preferred embodiment of the invention, the cooling arrangement comprises a suction apparatus realised to draw the cooling airflow through the stator windings and into the stator interior. The suction apparatus can comprise one or more fans arranged in the stator interior to draw or suck the warmed air from the radial cooling channels and the axial cooling channels.

As mentioned above, the warmed air can be "recycled" and used again as a cooling airflow. To this end, in a preferred embodiment of the invention, the cooling arrangement comprise one or more heat exchangers arranged in the stator interior, wherein a heat exchanger is realised to cool a warmed airflow that is drawn into the stator interior. To re-use the cooled airflow, in a preferred embodiment of the invention the fan arrangement is also realised to direct the cooled airflow out of the stator interior into the DE cavity and/or the NDE cavity. The fan arrangement can comprise several fans arranged to direct the cooled air outward from the stator interior. To this end, a fan or blower unit can be mounted to a fan outlet opening formed in a stator end plate.

In a further preferred embodiment of the invention, the cooling arrangement is realized to generate a pressure differential comprising a relative underpressure in the stator interior and a relative overpressure in a cavity. For example, this can be achieved by driving the blower units or fans to blow the cooling airflow into the cavity at the drive end and/or non-drive end in order to achieve the desired higher pressure. This can significantly improve the effectiveness of the bypass opening/manifold arrangement. Regardless of the way in which this pressure differential is obtained, the passage of air though the winding overhang and into the bypass openings will be facilitated as long as the pressure in the cavity is higher than the pressure in the stator interior.

The interior cavity of the stator usually also accommodates a passage that is used to access the drive end at the front of the generator, for example to allow a technician to access the hub, the rotor blades, the blade pitch motors, etc. As indicated above, the cooling airflow originates in the stator interior cavity. However, the necessity of incorporating one or more such access passages in the stator cavity makes it difficult or impossible to direct the cooling airflow evenly into the hot winding regions. For this reason, conventional cooling arrangements are characterized by uneven temperature distribution in the windings and winding overhang regions.

Therefore, in a preferred embodiment of the invention, the position of a bypass opening on an end face of the stator is determined on the basis of a temperature differential between a first winding overhang region and a second winding overhang region. For example, one or more bypass openings might be formed in a region of an end plate that is close to a service hatch. Similarly, one or more bypass openings might be formed in a region of an end plate that is removed from a fan outlet opening. The bypass openings and manifolds can therefore counteract the negative effects of having to restrict the placement of fan outlet openings on account of the service hatches in the stator end plates.

In a preferred embodiment of the invention, the number of a bypass openings arranged in an end face is determined on the basis of a temperature differential between a winding overhang region and an axial winding region. For example, temperature can be measured at various relevant positions in an operational wind turbine - for example at various points in the winding overhang at the drive end and the non-drive end. These measurements can be analysed to determine the hottest winding overhang region(s) and to determine a temperature difference between these hottest regions and the coolest winding overhang regions. The temperature difference will indicate the additional effort required to cool the hottest winding overhang regions in order to reach a temperature close to that in the cooler winding overhang regions.

Additionally, temperature may be measured at several points on the stator body in the straight winding sections. This information can be used to determine whether some of the existing cooling capacity can be spared for the additional cooling required for the hot winding overhang region(s), or whether the capacity of the cooling arrangement should be increased. For example, an existing heat exchanger unit and/or an existing blower unit could be replaced by a more powerful unit in order to increase the cooling capacity of the cooling arrangement.

Depending on the generator construction, the stator interior may only accommodate a relatively low number of blower units and/or heat exchangers. In such a realization, the efficiency of the cooling arrangement can be significantly improved by a suitable arrangement of bypass openings and manifolds. In a preferred embodiment of the invention, therefore, the arrangement of bypass openings extends about the periphery of an entire end face. In this embodiment, the manifold can be realised in the form of a conical annulus or ring.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a direct-drive wind turbine with a first embodiment of a cooling arrangement according to the invention;
Fig. 2 shows an enlarged view of a portion of Fig. 1;
Fig. 3 shows another view of the cooling arrangement shown in Fig. 1;
Fig. 4 shows a second embodiment of a cooling arrangement 1 according to the invention;
Fig. 5 shows a cooling arrangement of a prior art wind turbine.

In the diagrams, like numbers refer to like objects throughout. Objects in the diagrams are not necessarily drawn to scale.

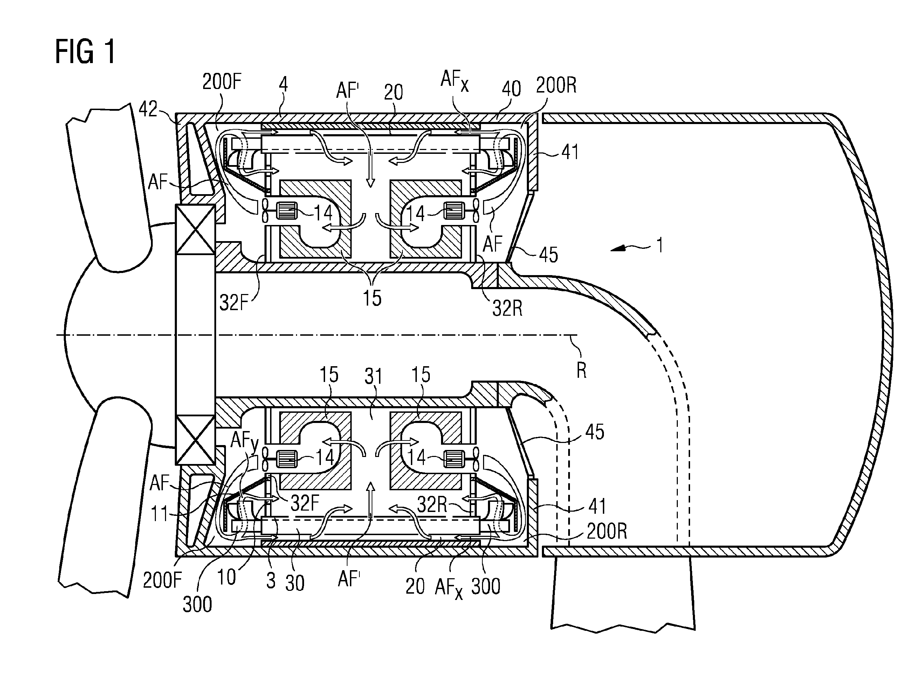

Fig. 1 is a very simplified diagram of an embodiment of a direct-drive wind turbine 2 according to the invention. A nacelle is mounted on top of a tower. A hub with rotor blades is mounted to a direct-drive generator comprising an outer rotor 4 and an inner stator 3. During operation, the outer rotor 4 is caused to rotate about an axis of rotation R. Windings 30 on the inner stator 3 are cooled by guiding a cooling airflow AFx into an air-gap 20 between rotor 4 and stator 3 and then drawing the airflow AFx through the stator windings 30 and into an interior cavity 31 of the stator 3. This interior cavity 31 extends about a main shaft around the axis of rotation R. In this embodiment, the warmed air AF' drawn into the interior cavity 31 is cooled by a number of heat exchangers 15 and then blown out of the interior cavity 31 by a number of fans 14 which direct a cooled airflow AF back into a cavity 200R, 200F at each end of the stator 3. The diagram shows that a winding overhang 300 extends to some distance into the cavity 200R between rotor housing 40 and brake-disc 41 at the non-drive end of the generator, and into the cavity 200F between rotor housing 40 and a front face 32F at the drive end. At the non-drive end, the cavity 200R is bounded by the cylindrical rotor housing body 40 and a brake disc 41, and is sealed off from the nacelle or canopy 44 by a suitable cover 45 or seal 45.

To ensure that the cooling airflow AF does not simply flow around the barrier-like winding overhang 300, the cooling arrangement 1 according to the invention comprises an arrangement of bypass openings 10 and manifolds 11. In this exemplary embodiment, the bypass openings 10 are formed on the stator front face 32F and stator rear face 32R. As a cooling airflow AF is directed from the stator interior 31 into the cavity 200R, 200F and in the direction of the air-gap 20, an underpressure inside the stator interior 31 acts to draw a portion AFy of the cooling airflow AF through the narrow spaces in the winding overhang 300H. The manifold 11 is arranged to ensure that the warmed air then passes directly into the stator interior 31 through the bypass openings 10. This portion AFy of the cooling airflow AF effectively "bypasses" the air-gap and enters the stator interior 31 by a shorter route. The underpressure in the stator interior cavity 31 can be relative, i.e. as long as the pressure inside the stator interior 31 is lower than the pressure in a cavity 200R, 200F, a portion of the cooling airflow AF will be encouraged to pass through the spaces in the winding overhang 300, since the openings 10 offer a path into the stator interior 31. The pressure differential can be achieved by driving a number of fans 14 to blow the cooled air AF into the cavity 200R, 200F. The relatively small space in the cavity 200F, 200R (reduced even further by the presence of the manifold 11) encourages such a pressure differential.

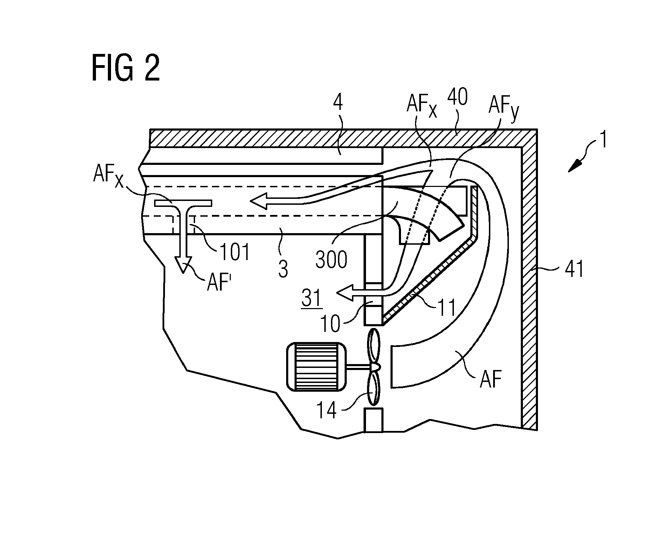

Axial cooling channels 100 and radial channels 101 (shown in Fig. 2) provide a path for a portion AFx of the cooling airflow AF alongside the windings 30 and into the stator interior 31. The cooling airflow portion AFx can enter the air-gap 20 at either end, and can travel along the axial cooling channels 100 and then through the radial channels 101 into the stator interior 31. Temperature measurements made for this type of generator can have been obtained at an earlier stage to determine the location of any winding overhang hotspot 300H and the required number and positions of bypass openings 10, and the dimensions and positions of the manifolds 11. The temperature measurements can also have been analysed to determine how much of the cooling capacity can be diverted into cooling the winding overhang hotspots 300H, and/or whether the cooling capacity of the cooling arrangement 1 should be increased.

Fig. 2 shows an enlarged view of a portion of a winding arrangement 30 on the stator 3 of the wind turbine 2 of Fig. 1. The diagram shows the parallel arrangement of windings 30 and illustrates the complex interleaved shape of the winding overhang 300. The diagram also shows how the presence of the manifold 11 in conjunction with the bypass openings 10 in the stator front face 32F or rear face 32R (the diagram applies to both drive end and non-drive end of the stator 3) acts to draw a portion AFy of the cooling airflow AF through narrow gaps in the winding overhang 300 and on through the bypass openings 10 and then into the stator interior 31.

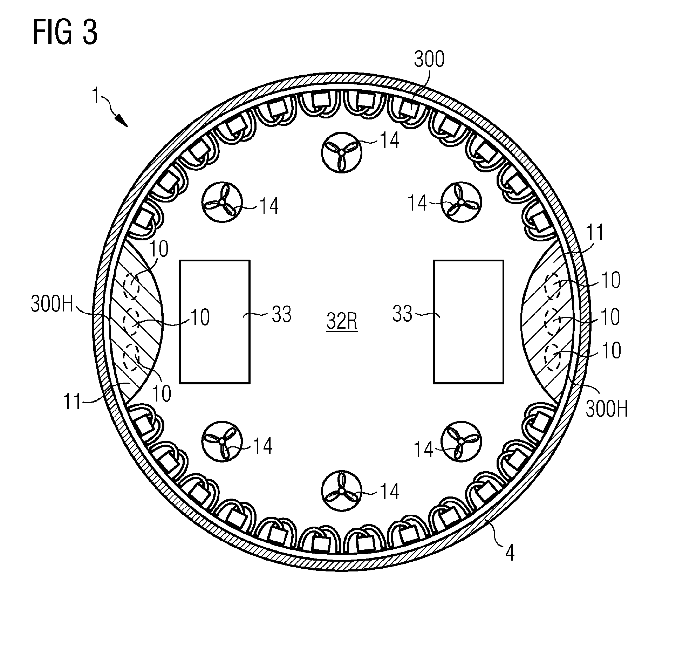

Fig. 3 shows a view of the cooling arrangement of Fig. 1 as seen from the non-drive end of the generator. The diagram shows two manifolds 11, one on the left-hand side and one on the right-hand side of the rear face 32R. The diagram also shows two service hatches 33 in the rear face 32R. Since a fan cannot be arranged in those positions, temperature in the winding overhang regions 300H in the neighbourhood of the service hatches 33 is higher than the temperature in the remaining winding overhang regions. These "hotspot" winding overhang regions 300H behind the manifolds 11 are indicated by the broken lines. Bypass openings 10, also indicated by broken lines, are arranged in the rear face 32R. The combination of bypass openings 10 and manifolds 11 ensures that a cooling airflow AF (provided through the outlet openings of the fans 14) is encouraged to pass through the winding overhang hotspot 300H. A similar arrangement can be used at the front end of the stator. The effectiveness of the hotspot cooling can be increased by ensuring that the pressure in the stator interior 31 is lower relative to the pressure in the rear-end cavity (or front-end cavity).

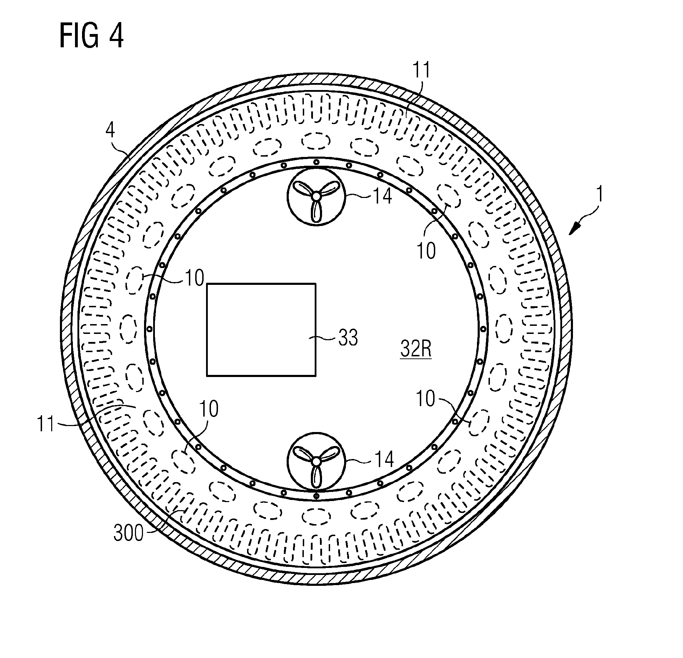

Fig. 4 shows a second embodiment of a cooling arrangement 1 according to the invention. Here, an annular manifold 11 extends about the entire winding overhang 300, and bypass openings 10 are arranged essentially evenly about a stator face. Here, the rear face 32R is shown. This embodiment can be beneficial for a stator design that results in a relatively uniform higher temperature over the entire winding overhang. This embodiment can be used at either end of the stator 3. Alternatively, this embodiment can be used at one end of the stator 3, and the embodiment described in Figs. 1 - 3 can be used at the other end, as appropriate.

Of course, other versions of the manifold are possible. For example, a manifold can be realized to extend over any fraction of the circumference of the stator front end 32F or rear end 32R. Equally, the bypass openings 10 can be as small or as large as desired, depending on the desired rate of airflow through the winding overhang region. Any suitable number of bypass openings can be provided underneath a manifold, and can be arranged in any suitable pattern.

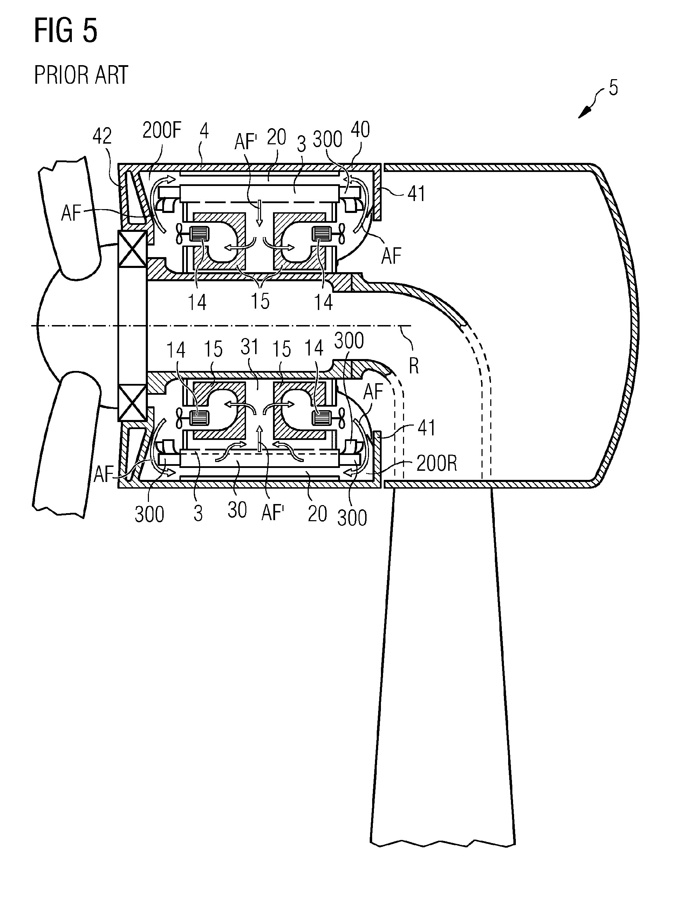

Fig. 5 shows an enlarged view of a region in the non-drive end of a prior art wind turbine 5. The diagram shows that the winding overhang 300 extends into a cavity 200R between rotor housing 40 and brake-disc 41, and into a cavity 200F between rotor housing 40 and hub interface 42. A cooling airflow AF is directed at the winding overhangs 300, but bypasses these to a large extent since it will tend to take the easier path around the winding overhang 300 on its way to the air-gap 20. The result is that the winding overhang 300 is not cooled sufficiently, and a significant temperature difference can develop between the winding overhang 300 and the more optimally cooled parallel winding arrangement between the stator teeth. This temperature difference shows that the winding overhang 300 is not cooled as well as the remainder of the windings. The hottest temperature of a conductor determines the current it will carry, so that the prior art cooling arrangements may be described as inefficient regarding this aspect.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A cooling arrangement (1) realised to cool stator windings (30) of a stator (3) enclosed in a generator housing (40), which cooling arrangement (1) comprises
- a fan arrangement (14) realized to direct a gaseous cooling medium (AF) into a cavity (200R, 200F), which cavity (200R, 200F) is defined by a stator end face (32R, 32F) and the generator housing (40);
- an arrangement of bypass openings (10) in a stator end face (32R, 32F), wherein a bypass opening (10) provides a path into an interior (31) of the stator (3); and
- a manifold (11) arranged to extend over the bypass openings (10) and at least partially over a winding overhang (300, 300H) of the stator windings (30) and realized to guide a cooling flow (AFy) through the winding overhang (300, 300H) into the stator interior (31).

2. A cooling arrangement according to claim 1, wherein the position of a bypass opening (10) on an end face (32R, 32F) is determined on the basis of a temperature differential between a first winding overhang region and a second winding overhang region.

3. A cooling arrangement according to claim 1 or claim 2, wherein the number of a bypass openings (10) arranged in an end face (32R, 32F) is determined on the basis of a temperature difference between a winding overhang region (300, 300H) and an axial winding region.

4. A cooling arrangement according to any of the preceding claims, wherein the arrangement of bypass openings (10) and manifold (11) extends about the periphery of an entire end face (32F, 32R).

5. A cooling arrangement according to any of the preceding claims, comprising a plurality of axial cooling channels (100), wherein an axial cooling channel (100) extends between adjacent windings (30) arranged on the stator (3).

6. A cooling arrangement according to any of the preceding claims, comprising a plurality of radial channels (101), wherein a radial channel (101) extends from an axial cooling channel (100) into the stator interior (31).

7. A cooling arrangement according to any of the preceding claims, realized to generate a pressure differential comprising a relative underpressure in the stator interior (31) and a relative overpressure in a cavity (200R, 200F).

8. A cooling arrangement according to any of the preceding claims, comprising a fan arrangement (14) realised to draw the gaseous medium (AF') into the stator interior (31).

9. A cooling arrangement according to any of the preceding claims, comprising a heat exchanger (15) arranged in the stator interior (31), which heat exchanger (15) is realised to cool the gaseous medium (AF') drawn into the stator interior (3) .

10. A cooling arrangement according to claim 8 or claim 9, wherein the fan arrangement (14) is realised to direct the gaseous cooling medium (AF) out of the stator interior (31) of the stator (3) into a cavity (200R, 200F).

11. A direct-drive wind turbine (2) comprising
- an outer rotor (4) and an inner stator (3), wherein the outer rotor (4) is arranged on a rotatable generator housing (40, 41, 42); and
- a cooling arrangement (1) according to any of claims 1 to 10 for cooling the stator windings (30) and winding overhang (300, 300H).

12. A method of cooling stator windings (30) of a stator (3) enclosed in a generator housing (40, 41, 42), which method comprises the steps of
- providing a number of bypass openings (10) in a stator end face (32R, 32F), wherein a bypass opening (10) provides a path for a gaseous cooling medium (AFy) into the stator interior (31);
- arranging a manifold (11) to extend over the bypass openings (10) and at least partially over a winding overhang (300, 300H) of the stator windings (30); and
- directing a gaseous cooling medium (AF) into the cavity (200R, 200F) defined by a stator end face (32R, 32F) and the generator housing (40, 41, 42) such that a gaseous cooling medium (AFy) passes from the cavity (200R, 200F) through the winding overhang (300, 300H) and via the bypass openings (10) into the stator interior (31).

13. A method according to claim 12, comprising the steps of
- determining a hottest winding overhang region (300H) of the stator (3); and
- providing at least one bypass opening (10) in a region of the stator end face (32F, 32R) corresponding to the hottest winding overhang region (300H).

14. A method according to claim 12 or claim 13, comprising the steps of drawing the gaseous cooling medium (AFx) through the stator windings (30) and into an interior cavity (31) of the stator (3) and/or cooling the gaseous cooling medium (AF') drawn into the interior cavity (31) of the stator (3) and/or directing the gaseous cooling medium (AF) out of the interior cavity (31) of the stator (3).

15. A method of retrofitting a wind turbine (5) that already comprises a stator (3) enclosed in a generator housing (40, 41, 42) and a gaseous cooling arrangement 14, 15) for cooling stator windings (30) of the stator (3);
which method comprises the steps of
- forming at least one bypass opening (10) in a region of the stator end face (32F, 32R) corresponding to a hottest winding overhang region (300H); and
- arranging a manifold (11) to extend over the bypass openings (10) and at least partially over the winding overhang (300H).
